(19)

Europäisches Patentamt
European Patent Office
Office européen des brevets

(11) **EP 2 562 693 A1**

(12) **EUROPEAN PATENT APPLICATION**

(43) Date of publication:
**27.02.2013 Bulletin 2013/09**

(51) Int Cl.:
***G06N 5/00*** *(2006.01)*

(21) Application number: **11178630.7**

(22) Date of filing: **24.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens AG Österreich**
**1210 Wien (AT)**

(72) Inventors:
• **Dhungana, Deepak**
**1120 Wien (AT)**

• **Falkner, Andreas**
**1140 Wien (AT)**
• **Haselböck, Alois**
**3392 Schönbühel-Aggsbach (AT)**

(74) Representative: **Maier, Daniel Oliver**
**Siemens AG**
**CT IP Com E**
**Postfach 22 16 34**
**80506 München (DE)**

(54) **Method for the configuration of a cardinality-based feature model**

(57) The invention is related to a method for cardinality-based feature modeling comprising:
- defining the feature model with cardinalities for the features and their attributes
- defining generic constraints according to "G. *Fleischanderl*, G. *Friedrich, A. Haselböck, H. Schreiner, and M. Stumptner. Configuring large* systems *using generative constraint satisfaction. IEEE Intelligent Systems, 13 (4) : 59-68, 1998. "*
- consistency checking and error handling for defining a logically correct feature model.

## FIG 1

EP 2 562 693 A1

## Description

The invention concerns a method for the configuration of a cardinality-based feature model.

Software product line engineering has established itself as a standard practice for exploiting the commonalities among a family of products and managing the variabilities among them in a systematic way. Configuration of individual products is often based on variability models.

Among others, feature modeling is particularly popular. It is based on a statically defined tree of features where each feature may or may not be selected for the final product.

Such static feature modeling approaches commonly use reasoning techniques based on propositional formulae or constraint satisfaction problems.

Product configuration in product lines is typically based on conventional constraint satisfaction problems, which consists of a fixed set of variables and a fixed set of constraints on these variables.

However, industrial practice has shown that in many configuration applications, the numbers of involved variables and constraints are not known from the beginning.

In contrast to merely selecting features, real-world applications require features to be instantiated (or cloned or copied) resulting in multiple instances of the same feature and whole subtrees in the structure of the model.

In product line engineering, such scenarios are addressed by "cardinality-based feature models" as described in "K. Czarnecki and C. H. P. Kim, "Cardinality-based feature modeling and constraints: A progress report, 2005. "

In cardinality-based feature models, configuration may instantiate multiple feature instances. The result of the configuration is therefore a set of feature instances satisfying generic constraints, where the subtree of each instance can be configured differently.

It is an object of the invention to enhance the configuration process of cardinality-based feature modeling.

According to the present invention the foregoing object is accomplished with a method according to claim 1.

Preferable embodiments of the invention are shown in the dependent claims.

Generative Constraint Satisfaction as described in "G. Fleischanderl, G. Friedrich, A. Haselb¨ock, H. Schreiner, and M. Stumptner. Configuring large systems using generative constraint satisfaction. IEEE Intelligent Systems, 13(4): 59-68, 1998." is a formalism which supports generative and generic constraints by defining them on a meta level. They overcome the limitations of classical constraint satisfaction problems with fixed structure by incrementally introducing additional variables and constraints when components are added to generate a complete and consistent solution.

The invention will become apparent from the following description of an example, which is illustrated in the figures. This example, the figures, and the various embodiments used to describe the principles of the approach are by way of illustration only and should not be construed in any way to limit the scope of the invention.

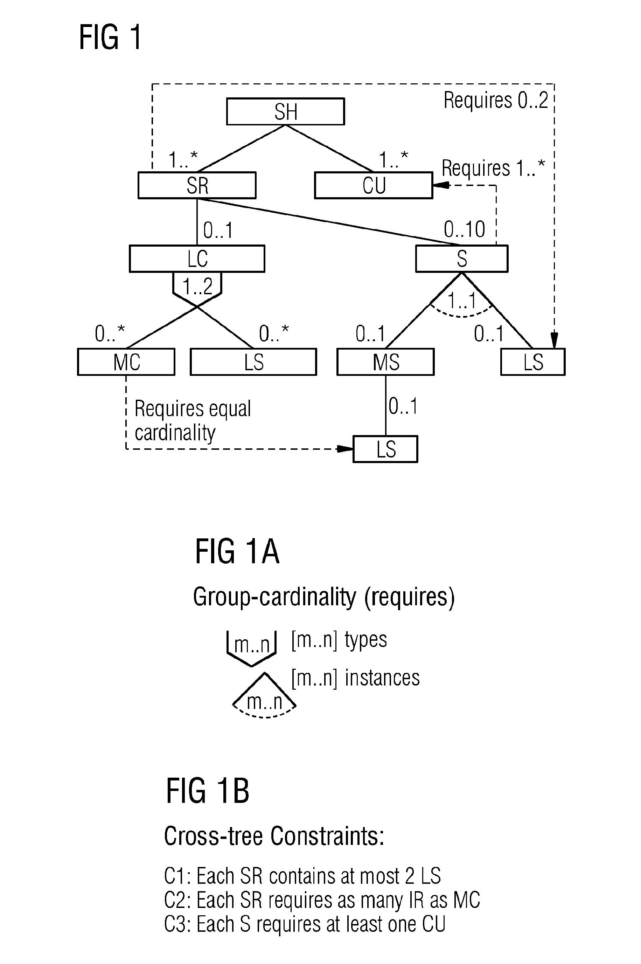

Fig. 1 depicts part of a feature model for a smart home.
Fig. 1a shows the principle, how cardinalities are depicted in a feature model.
Fig. 1b shows a list of cardinality contraints.

A smart home is a computer-assisted housing unit. Dependent on the requirements of the owner, it is outfitted for home automation.

The result of the configuration depends on the number of rooms which shall be equipped with room-specific features.

This means that the feature model grows/shrinks as the number of equipped rooms, thus imposing two challenges: a) multiplicity of features and b) generic constraints

a) multiplicity of features

As depicted in Figure 1, one of the key features of a SmartHome SH is a SmartRoom SR. A SmartRoom SR is a room which contains features such as LightsControl LC.

Each room has an automatic and/or a manual mode for controlling lighting LC in the room. Automatic operation is supplied by an arbitrary number of motion detection MC, manual control by any number of light switches LS.

These functional features require sensors S to work.

The sensors S are modeled as features, too: each sensor is either a light detector LS or a movement detector MS, the latter one having a subfeature for infra-red detection IR.

The number of rooms is unbounded in a house. Each room can be configured differently i.e. equipped with different features.

Therefore, a smart home SH cannot be modeled with conventional feature models except for assuming some upper bound (which might not be sufficient) and massive duplication of sub-features. Building a feature model for each room separately is not sufficient, either, as it cannot cover global constraints like the third constraint C3 of our example (the selection of a sensor in any room requires a control unit in the smart home).

Even worse, multiplicity could occur on any level - e.g. different sensor configuration.

b) Generic constraints

In contrast to a conventional feature model where each feature corresponds to only one instance, in a cardinality-based feature model there can be several different instances of a feature. Therefore a constraint on a feature does no longer simply apply to one instance or variable. Rather, it can refer either to the feature type, or to all instances, or to instances in some given context. Furthermore, the constraints could relate to some specific attributes of features, which also correspond to variables which exist only after a feature is instantiated.

Therefore the meaning of constraints must be defined exactly. The active constraints are generic in a way that they are not known statically but have to be instantiated ("generated") dynamically at runtime together with the instances of features. This constraint instantiation corresponds to quantification ($\forall x$:...) in predicate logic.

The example in Figure 1 shows how some of the cardinality constraints can be modeled directly in the feature model, e.g.

- A SmartHome contains at least one SmartRoom.
- Each SmartRoom contains at most 10 Sensors.

Czarnecki and C. H. P. Kim, "Cardinality-based feature modeling and constraints: A progress report, 2005." define feature cardinality such that it denotes how many instances of a feature with its entire subtree can be included as children of the feature's parent when specifying a concrete configuration. Cardinality is an interval of the form [m..n], where m and n are non-negative integers denoting minimum and maximum number of instances allowed. [0..1] denotes optional features, [1..1] denotes mandatory features, and [0..*] denotes unconstrained features.

By that, the basic structure of a feature model is a tree of sub-features with cardinalities. The cardinality of each parent feature is always [1..1].

The group cardinalities, too, are represented as proposed in Czarnecki and C. H. P. Kim, "Cardinality-based feature modeling and constraints: A progress report, 2005. " except for constraints with type cardinalities.

Examples:

G1: Each Sensor is either a Movement detector MS or a Light detector LS (i.e. an alternative) .

G2: The instances of sub-features of LightsControl LC must be from at least one and at most two of its types Motion MC, or LightSwitch LS.

Other cardinality constraints as listed in Fig. 1b are cross-tree dependencies and are depicted by dashed lines in Fig.1.

C1: Each SmartRoom contains at most 2 Light sensors.

C2: Each SmartRoom requires as many IR sensors as Motion features for the lights control. An alternative formulation is: Each Motion feature requires a distinct Movement feature with IR in the same room.

C3: Each Sensor requires at least one ControlUnit which may be used by different sensors.

According to the invention, generative constraint satisfaction as described in "G. Fleischanderl, G. Friedrich, A. Haselböck, H. Schreiner, and M. Stumptner. Configuring large systems using generative constraint satisfaction. IEEE Intelligent Systems, 13(4) : 59-68, 1998." is used for reasoning and configuration of cardinality-based feature models.

The method of generative constraint satisfaction is a formalism which supports generative and generic constraints by defining them on a meta level. They overcome the limitations of classical constraint satisfaction methods with fixed structure by incrementally introducing additional variables and constraints when components are added to satisfy a constraint.

The method of generative constraint satisfaction (GCSP) is an extension of classical constraint satisfaction methods (CSP) designed to cope with dynamic aspects arising in many technical application domains, like configuration, design, or planning. Classical constraint satisfaction methods represent a problem by a fixed set of variables, their domains and constraints, which is usually not appropriate if the number of variables in a solution is not known at modeling time.

Generative constraint satisfaction (GCSP) was originally designed for representing and solving large-scale, complex configuration problems and is therefore a powerful and highly expressive technique. Besides constraint satisfaction, the main background of GCSP is the object-oriented paradigm with its clean separation of the problem model and the problem instance.

For the present invention, only the following aspects of GCSP are of interest:

(i) The knowledge base (KB) stands for the specification of the domain of discourse (i.e. the problem model), representing all possible concrete instances. It is a tuple

$$KB = <T^{KB}; A^{KB}; C^{KB}>$$

where $T^{KB}$ is a set of component types, $A^{KB}$ is a set of association schemata, and $C^{KB}$ is a set of constraint schemata. Constraint schemata restrict the set of valid configurations; they will be defined in paragraph (iv). Each association schema is a tuple
$<t_1; t_2; min_2; max_2>$ where $t_1; t_2$ are component types from $T^{KB}$ $0 \leq min_2 \leq max_2$ are cardinalities
(we use '*' for "not restricted" in $max_2$)
The rectangles (types) and lines (associations) with cardinalities in Figure 1 represent the KB in an UML-like format.

(ii) A configuration (i.e. a problem instance) is a concrete set of objects, instantiating structure and constraints defined in the knowledge base. It is a tuple

$$CONF = <T^{I}; A^{I}; C^{I}>$$

where $T^I$ is the set of all components (instances) in the configuration, $A^I$ is the set of associations between the components, and $C^I$ are the constraint instances. Each component has a unique type. $T^I/t$ denotes the set of components of type t.

(iii) For each association schema $<t_1; t_2; min_2; max_2>$ in the knowledge base, and for each $cobj_1 \in T^I/t_1$ and $cobj_2 \in T^I/t_2$ in CONF, the following association constraints are in C:

$$min_2 \leq |cobj_1.t_2| \leq max_2$$
$$|cobj_2.t_1| = 1$$
$$cobj_1 \in cobj_2.t_1 \leftrightarrow cobj_2 \in cobj_1.t_2$$

Whenever a new component instance is created or deleted, its associations and constraints are created or deleted, too.

(iv) Like the other constraints, consistency constraints are Boolean expressions which reduce the set of possible solutions.

Since we don't have concrete components in our KB, but component types, we cannot define concrete constraints, but constraint schemata.
$C^{KB}$ is the set of constraint schemata. A constraint schema for a component type t $\in T^{KB}$ has the form
$cobj : cobj.type = t \rightarrow p(t)$ where p(t) is a Boolean expression evaluating to true or false in a concrete configuration. We allow the following syntax for the expression $p(t)$ :

Let $S, S_1, S_2$ be sets of components from $T^I$ (we write S for S(t)). Let $min, max$ be non-negative integers. Let r be a role name of an association in $A^{KB}$ (i.e. the name of an associated component type - $t_1$ or $t_2$) .

$$p(t) ::= |S|_{min}^{max}$$
$$\mid |S_1| = |S_2|$$

$$S ::= t.r$$
$$| S_1.r$$
$$| S_1[i]$$
$$| S_1 \cup S_2 \mid S_1 \cap S_2 \mid S_1 - S_2$$

Interpretation:

- The expression $|S|_{min}^{max}$ constraints the cardinality of the given set. It is said to be satisfied, if and only if the number of components in S is greater or equal than min and less or equal than max.

- The expression $|S_1| = |S_2|$ is satisfied, if and only if the two sets $S_1$ and $S_2$ have the same number of members.

- The expression $t.r$ represents the set of components of the association $t.r$. If $r$ is not a valid role of $t$, this evaluates to the empty set.

- The expression $S.r$ represents the set of all components S reachable from the components in S via the role $r$:

- The expression $S[i]$ for a positive integer i represents the set containing the $i^{th}$ component of S. If S is empty or has less than i elements, this evaluates to the empty set.

- U, n and - are the standard set union, intersection and subtraction.

  (v) For defining consistency of a configuration *CONF* based on a knowledge base KB, we induce a classical constraint satisfaction problem CSP <V;C> for it, where the variables V correspond to the associations $A^I$ in *CONF,* and C to its constraints $C^I$.

The configuration is consistent if and only if its induced CSP is satisfied - i.e., all its variables have values from their domains and all its association constraints and consistency constraints are satisfied.

The inventive mapping from cardinality-based feature model to GCSP is straight-forward:

Features are component types, feature/sub-feature relations incl. their cardinalities are associations, group cardinalities and cross-tree dependencies are modeled as consistency constraints.

A portion of the example which is illustrated in fig. 1 can be represented by a GCSP in the following way:

$$T^{KB} = \{SmartHome, SmartRoom, ControlUnit,$$
$$LightsControl, Motion, LightSwitch,$$
$$Sensor, Movement, Light\}$$
$$A^{KB} = \{$$
$$\langle SmartHome, SmartRoom, 1, * \rangle,$$
$$\langle SmartHome, ControlUnit, 1, * \rangle,$$
$$\langle SmartRoom, LightsControl, 0, 1 \rangle,$$
$$\ldots\}$$
$$C^{KB} = \{G1, G2, C1, C2, C3\}$$

Group cardinality constraints:

$$G1 : \forall s : s.type = Sensor \rightarrow$$
$$\mid s.Movement \cup s.Light \mid_1^1$$

$$G2 : \forall l : l.type = LightsControl \rightarrow$$
$$\mid l.Darkness[1] \cup l.Motion[1] \cup l.LightSwitch[1] \mid_1^2$$

The general pattern for consistency constraints is to specify the cardinality restrictions of a subset of all features, starting from a certain feature.

Since all features in the tree are connected via child-parent paths, navigation from a starting feature to all other features is always possible:

```
// C1: Each SmartRoom contains at most 2 light sensors.
```
$$\forall r : r.type = SmartRoom \rightarrow \mid r.Sensor.Light \mid_0^2$$
```
// C2: Same number of IRs as Motion controls.
```
$$\forall r : r.type = SmartRoom \rightarrow$$
$$\mid r.LightsControl.Motion \mid =$$
$$\mid r.Sensor.Movement.IR \mid$$
```
// C3: A Sensor requires a ControlUnit.
```
$$\forall s : s.type = Sensor \rightarrow$$
$$\mid s.SmartRoom.SmartHome.ControlUnit \mid_1^*$$

Declarative representation of both model and instances allows various interesting reasoning tasks.

As suggested in Czarnecki and C. H. P. Kim, "Cardinality-based feature modeling and constraints: A progress report, 2005. " a knowledge base KB can be analyzed by consistency algorithms for checking consistency, detecting anomalies, computing metrics, or finding all features which must be present in every solution.

The process of configuring a product is usually a semi-interactive task: The user selects or - in case of feature models with multiplicities - instantiates one or more features, then a solver automatically derives some knowledge, which can be:

- Which features are additionally needed?
- Which features are now forbidden?
- Is it possible to complete the current product fragment to a solution, at all?

Then the user selects features again, and so forth. The user makes the decisions, and the reasoning system guides him/her through the configuration process and enforces the consistency of the final configuration. The solver can either compute possible repair actions, or it provides explanations so that the user can easily identify the features in conflict and can repair them manually.

**Claims**

1. A method for cardinality-based feature modeling comprising:

- defining the feature model with cardinalities for the features and their attributes
- defining generic constraints according to "G. *Fleischanderl, G. Friedrich, A. Haselböck, H. Schreiner, and M. Stumptner. Configuring large* systems *using generative constraint satisfaction. IEEE Intelligent Systems, 13 (4) : 59-68, 1998. "*
- consistency checking and error handling for defining a logically correct feature model.

2. Use of the method of claim 1 for product configuration, comprising:

- representing cardinality-based feature models as a generative constraint satisfaction problem,
- enabling interactive product configuration, by allowing user-input during the configuration process
- reasoning and automatically completing the configuration as far as possible.

# FIG 1

# FIG 1A

Group-cardinality (requires)

[m..n] types

[m..n] instances

# FIG 1B

Cross-tree Constraints:

C1: Each SR contains at most 2 LS
C2: Each SR requires as many IR as MC
C3: Each S requires at least one CU

**EP 2 562 693 A1**

EUROPEAN SEARCH REPORT

Application Number

EP 11 17 8630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Krzysztof Czarnecki, Chang Hwan Peter Kim: "Cardinality-Based Feature Modeling and Constraints: A Progress report", OOPSLA 2005 , 20 October 2005 (2005-10-20), pages 1-9, XP002677451, DOI: 10.1.1.128.6904 Retrieved from the Internet: URL:http://citeseerx.ist.psu.edu/viewdoc/s ummary?doi=10.1.1.128.6904 [retrieved on 2012-06-11] * the whole document * ----- | 1,2 | INV. G06N5/00 |
| A,D | FLEISCHANDERL G ET AL: "CONFIGURING LARGE SYSTEMS USING GENERATIVE CONSTRAINT SATISFACTION", IEEE EXPERT, IEEE SERVICE CENTER, NEW YORK, NY, US, vol. 13, no. 4, 1 July 1998 (1998-07-01), pages 59-68, XP000791759, ISSN: 0885-9000 * the whole document * ----- | 1,2 | |
| A | A. FALKNER, G. FLEISCHANDERL, G. SCHENNER: "Constraints an der Benutzerschnittstelle vonKonfigurator-Lösungen", E&I. Elektrotechnik und Informationstechnik , vol. 122, no. 7-8 31 December 2005 (2005-12-31), pages 253-256, XP002677452, Retrieved from the Internet: URL:http://www.springerlink.com/content/35 15131017g30323/fulltext.pdf [retrieved on 2012-06-11] * the whole document * ----- | 2 | TECHNICAL FIELDS SEARCHED (IPC) G06N |

The present search report has been drawn up for all claims

| Place of search | Date of completion of the search | Examiner |
|---|---|---|
| The Hague | 11 June 2012 | Valencia, Erika |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. CZARNECKI ; C. H. P. KIM.** *Cardinality-based feature modeling and constraints: A progress report,* 2005
- **G. FLEISCHANDERL ; G. FRIEDRICH ; A. HASELB¨OCK ; H. SCHREINER ; M. STUMPTNER.** Configuring large systems using generative constraint satisfaction. *IEEE Intelligent Systems,* 1998, vol. 13 (4), 59-68
- **CZARNECKI ; C. H. P. KIM.** *Cardinality-based feature modeling and constraints: A progress report,* 2005
- **G. FLEISCHANDERL ; G. FRIEDRICH ; A. HASELBÖCK ; H. SCHREINER ; M. STUMPTNER.** Configuring large systems using generative constraint satisfaction. *IEEE Intelligent Systems,* 1998, vol. 13 (4), 59-68